# EUROPEAN PATENT APPLICATION

(11) **EP 3 162 909 A1**
(43) Date of publication of application: **03.05.2017**
(21) Application number: 15811241.7
(22) Date of filing: 28.05.2015
(51) Int. Cl.: C22C 45/04, B23K 35/30, C22C 19/05

(54) **NICKEL-BASED AMORPHOUS ALLOY RIBBON FOR BRAZING, AND STAINLESS STEEL JOINED OBJECT USING SAME**

(30) Priority: 26.06.2014 JP 2014131017
(71) Applicant: Hitachi Metals, Ltd., Tokyo 1088224 (JP)
(72) Inventor: YOSHIZAWA Yoshihito, Yasugi-shi Shimane 692-8601 (JP); UEDA Seishin, Yasugi-shi Shimane 692-8601 (JP)
(74) Representative: Herzog, Fiesser & Partner Patentanwälte PartG mbB
(86) International application number: PCT/JP2015/065418
(87) International publication number: WO 2015/198790

(57) **Abstract**

The present invention is intended to modify a composition of a typical brazing Ni-base amorphous alloy ribbon to reduce clogging of a casting nozzle and embrittlement in manufacturing of the ribbon, thereby improving workability and improving corrosion resistance and bonding strength of a stainless steel bonded body used for a heat exchanger etc.

Provided are a brazing Ni-base amorphous alloy ribbon having a composition represented by a composition formula: Ni_{100-d-x-y-z-f-g}Cr_{d}PₓSi_{y}B_{z}C_{f}N_{g} (in units of mass%, 22.00 ≤ d ≤ 29.00, 4.00 ≤ x ≤ 8.00, 1.00 ≤ y ≤ 7.00, 0 < z ≤ 0.20, 0.005 ≤ f ≤ 0.100, 0.001 ≤ g ≤ 0.050, and 7.00 ≤ x + y ≤ 13.00) and a stainless steel bonded body formed by braze-bonding using the brazing Ni-base amorphous alloy ribbon.

## Description

### TECHNICAL FIELD

The present invention relates to a brazing Ni-base amorphous alloy ribbon suitable for brazing of metal members such as stainless steel members. The present invention also relates to a stainless steel bonded body using such a brazing Ni-base amorphous alloy ribbon.

### BACKGROUND ART

For example, in a heat exchanger (an EGR cooler) of an exhaust gas recirculation system of an automobile, a bonded structure made by brazing of stainless steel members such as austenitic or ferritic stainless steel member. In particular, ferritic stainless steel has been recently often used for the purpose of cost reduction.

Typically, the above-described brazing material used for brazing of the stainless steel members is mainly made of Ni-base (nickel-base) alloy. Examples of such a brazing material include Ni-base alloy powder and a Ni-base amorphous alloy ribbon. For the sake of easy handling, the brazing material in the form of powder is, in use, usually processed into paste. It is not necessary to process the brazing material in the form of ribbon into paste, and such a material can be used without change. Thus, it is easy to use the brazing material in the form of ribbon. The brazing material in the form of ribbon exhibits a higher effectiveness as compared to that of the brazing material in the form of paste containing powder because of the following advantages: melting at a fast pace; high wetting and spreading properties and high permeability due to favorable fluidity; less mixing of impurities and air bubbles; easy mechanical processing such as pressing, bending, and cutting; easy continuous or automatic supply by, e.g., rolling of the ribbon in a coil shape; a long furnace life due to less internal contamination of a furnace for brazing; and a less risk of health hazard caused by scattering.

Generally, a brazing material containing Cr (chromium) added to Ni as a main component for the purpose of improving corrosion resistance has been known as the brazing material made of Ni-base alloy. Moreover, a brazing material containing B (boron) or P (phosphorus) added for the purpose of lowering a melting point for decreasing a brazing temperature has been known. For example, BNi-2 standardized according to JIS or AWS and shown in Table 1 is a representative Ni-base brazing material containing B. Further, BNi-7 is a representative Ni-base brazing material containing P. Moreover, BNi-5 is a representative Ni-base brazing material containing Si (silicon). The brazing material BNi-5 contains almost no B and P. For this reason, BNi-5 exhibits a high melting point and a relatively-high mechanical strength.

**[Table 1]**

| Type | Chemical Component (mass%) | | | | | | | | Reference Temperature (°C) | | |
|---|---|---|---|---|---|---|---|---|---|---|---|
| | Cr | B | Si | Fe | C | P | Ni | Other Total | Solidus -Line | Liquidus -Line | Brazing |
| BNi-2 | 6.0 to 8.0 | 2.75 to 3.50 | 4.0 to 5.0 | 2.5 to 3.5 | equal to or less than 0.06 | equal to or less than 0.02 | Remnant | equal to or less than 0.50 | about 970 | about 1010 | 1010 to 1175 |
| BNi-5 | 18.0 to 19.5 | equal to or less | 9.75 to 10.50 | - | equal to or less | equal to or less | Remnant | equal to or less than | about 1080 | about 1135 | 1150 to 1205 |
| | | than 0.03 | | | than 0.10 | than 0.02 | | 0.50 | | | |
| BNi-7 | 13.0 to 15.0 | equal to or less than 0.01 | equal to or less than 0.10 | equal to or less than 0.20 | equal to or less than 0.08 | 9.7 to 10.5 | Remnant | equal to or less than 0.50 | about 890 | about 890 | 925 to 1010 |

JIS-Z3265: 1998

By adding B having an amorphous formation ability to the above-described BNi-5-based composition, an amorphous-alloyed ribbon-shaped brazing material has been available in practical use. Further, a ribbon-shaped brazing material containing P or one or more types of other elements has been available in practical use. For example, Patent Literature 1 discloses Ni-Cr-Si-B-based glass vitreous ductile Ni-base brazing foil because such foil is useful in brazing of stainless steel. Moreover, Patent Literature 2 discloses the following types of amorphous ductile Ni-base brazing foil: Ni-Cr-Si-B-P-based foil; Ni-Cr-Si-B-P-M₁-based foil ("M₁" is one or more selected from Fe (iron) and Co (cobalt)); Ni-Cr-Si-B-P-M₂-based foil ("M₂" is one or more selected from Mo (molybdenum), Nb (niobium), Ta (tantalum), W (tungsten), and Cu (copper)); and Ni-Cr-Si-B-P-C-based foil ("C" is carbon). Patent Literature 2 further discloses a heat exchanger obtained in such a manner that stainless steel components are bonded using the above-described brazing foil. In addition, Patent Literature 3 discloses Ni-Cr-Si-B-P-Fe-based glass vitreous ductile Ni-base brazing foil. Moreover, Patent Literature 4 discloses Ni-Cr-Si-B-P-Fe-Mo-Cu-based amorphous ductile brazing alloy foil and a heat exchanger obtained in such a manner that stainless steel components are bonded using the brazing alloy foil.

Because B is regarded as an impurity element, there is a brazing material containing substantially no B. Such a brazing material can be used in the form of powder, foil, or rod, and therefore, is useful in brazing of stainless steel. For example, Patent Literature 5 discloses Ni-Cr-Si-P-based and Ni-Cr-Si-P-Mo-based Ni-base heat-resisting brazing materials. Moreover, Patent Literature 6 discloses a Ni-Cr-Si-P-M₃-based ("M₃" is one or more selected from A1 (aluminum), Ca (calcium), V (vanadium), and misch metal) Ni-base heat-resisting brazing material. For this type of material, a Ni-base heat-resisting brazing material having a composition further containing one or more selected from Fe, Co, and Mo has been further disclosed.

### CITATION LIST

### PATENT LITERATURES

PATENT LITERATURE 1: U.S. Patent No. 4543135 (Claims 1, 5)
PATENT LITERATURE 2: JP-T-2011-501700 (Claims 1, 2, 26)
PATENT LITERATURE 3: U.S. Patent No. 4302515 (Claims 1, 3)
PATENT LITERATURE 4: JP-T-2009-545451 (Claims 8, 19, 33)
PATENT LITERATURE 5: JP-A-9-225679 (Claims 1, 2 and Field of the Invention)
PATENT LITERATURE 6: JP-A-2002-144080 (Claims 1, 2 and Field of the Invention)

### SUMMARY OF THE INVENTION

### PROBLEMS TO BE SOLVED BY THE INVENTION

As described above, various types of brazing material have been known. For example, BNi-2 has the following problems or unsatisfactory issues. These problems or unsatisfactory issues include, for example, easy occurrence of corrosion due to a small amount of Cr, insufficient wetting and spreading properties, and reduction in strength and corrosion resistance of a base material (stainless steel) due to diffusion of B to the base material. Moreover, BNi-5 has the following problems or unsatisfactory issues. These problems or unsatisfactory issues include, for example, insufficient fluidity and wetting and spreading properties, defective bonding due to insufficient penetration of a molten brazing material into a bonded portion, and reduction in mechanical strength of a base material (stainless steel) due to coarsening of crystal grains of the base material caused by a relatively-high brazing temperature. Further, BNi-7 has problems such as a lower bonding strength than that of BNi-2 or BNi-5.

As described above, the ribbon-shaped brazing material made of Ni-base amorphous alloy is easier to use as compared to the brazing material in the form of powder. Most of the ribbon-shaped brazing materials contain a large amount of B for amorphization and melting point lowering. In recent years, ferritic stainless steel has been often used. In this case, B contained in the brazing material diffuses to the base material (stainless steel) to generate Cr boride. For this reason, a problem that the base material is corroded due to a surrounding Cr concentration decrease caused by generation of the Cr boride has been emphasized. The brazing material having the Ni-Cr-Si-P-based, the Ni-Cr-Si-P-Mo-based, or the Ni-Cr-Si-P-M₃-based ("M₃" is one or more selected from Al, Ca, V, and misch metal) composition as disclosed in Patent Literatures 5 and 6 is preferable as a countermeasure against the above-described problem.

However, for the brazing materials disclosed in Patent Literatures 5 and 6, amorphization for manufacturing a ribbon-shaped brazing material is not taken into consideration at all. For this reason, even when an attempt is made to use molten metal having the same composition as above to form a ribbon, clogging of a casting nozzle is easily caused. For this reason, there is a problem that it is difficult to form the ribbon. Even when the molten metal is formed into the ribbon, there are problems such as reduction in brazing strength due to breaking like flakes by embrittlement or a high surface roughness. That is, a ribbon-shaped brazing material made of Ni-base amorphous alloy and being able to solve the problem of corroding a stainless steel base material due to diffusion of B contained in the brazing material has not typically been available in practical use.

The present invention is intended to provide a brazing Ni-base amorphous alloy ribbon being less likely to cause clogging of a casting nozzle, exhibiting excellent toughness without embrittlement of the ribbon, and being able to solve the problem of corroding a stainless steel base material. Moreover, the present invention is further intended to provide a stainless steel bonded body obtained using the brazing Ni-base amorphous alloy ribbon and exhibiting a high bonding strength.

### SOLUTIONS TO THE PROBLEMS

The inventors of the present invention have conducted study on the above-described problems, and have found that a balance of the contents of Cr, P, Si, B, C, and N with respect to Ni as a main component greatly influences amorphization, ribbon toughness, clogging of a casting nozzle, bonding strength of a brazed portion, and corrosion resistance in the vicinity of the brazed portion. Eventually, the inventors of the present invention have arrived at the present invention.

That is, the present invention is a brazing Ni-base amorphous alloy ribbon having a composition represented by a composition formula:
Ni_{100-d-x-y-z-f-g}Cr_{d}PₓSi_{y}B_{z}C_{f}N_{g} where in units of mass%, 22.00 ≤ d ≤ 29.00, 4.00 ≤ x ≤ 8.00, 1.00 ≤ y ≤ 7.00, 0 < z ≤ 0.20, 0.005 ≤ f ≤ 0.100, 0.001 ≤ g ≤ 0.050, and 7.00 ≤ x + y ≤ 13.00.

In the present invention, a condition of 0.01 ≤ z ≤ 0.15 is preferably satisfied.

Moreover, a condition of 7.00 ≤ x + y ≤ 10 is preferably satisfied.

Further, part of Ni can be replaced with Mo of equal to or less than 10.00 mass%.

In addition, part of Ni can be replaced with Cu of equal to or less than 5.00 mass%.

Moreover, part of Ni can be replaced with at least one element type selected from V, Nb, and Ta of equal to or less than 1.00 mass%.

Further, part of Ni can be replaced with Fe of equal to or less than 25.00 mass%. Note that part of Ni can be replaced with two or more element types selected from the following element types: Mo of equal to or less than 2.00 mass%; Cu of equal to or less than 1.50 mass%; at least one element type selected from V, Nb, and Ta of equal to or less than 1.00 mass%; and Fe of equal to or less than 25.00 mass%.

In addition, the liquidus-line temperature (T_{L}) is within a range of 900°C to 1050°C.

A stainless steel bonded body formed by braze-bonding using the above-described brazing Ni-base amorphous alloy ribbon of the present invention can be manufactured.

### EFFECTS OF THE INVENTION

According to the brazing Ni-base amorphous alloy ribbon of the present invention, clogging of the casting nozzle can be reduced by use of molten metal with the composition of the brazing Ni-base amorphous alloy ribbon of the present invention. In addition, amorphization can be stably promoted. This leads to toughness improvement, and as a result, the shape of the ribbon can be stably maintained. Moreover, the brazing Ni-base amorphous alloy ribbon of the present invention is applied to, e.g., brazing of stainless steel base materials used for a heat exchanger etc., and as a result, a stainless steel bonded body exhibiting favorable corrosion resistance and bonding strength in the vicinity of a bonded portion of the base materials (stainless steel) after brazing can be obtained.

### DESCRIPTION OF THE EMBODIMENTS

An important feature of the present invention is a balance of a composition forming a Ni-base amorphous alloy ribbon for brazing. That is, the present invention is characterized in that a balance of the contents of Cr, P, Si, B, C, and N with respect to Ni as a main component is optimized. Specifically, the brazing Ni-base amorphous alloy ribbon (hereinafter referred to as a "ribbon of the present invention") of the present invention has a composition represented by a composition formula: Ni_{100-d-x-y-z-f-g}Cr_{d}PₓSi_{y}B_{z}C_{f}N_{g} (in units of mass%, 22.00 ≤ d ≤ 29.00, 4.00 ≤ x ≤ 8.00, 1.00 ≤ y ≤ 7.00, 0 < z ≤ 0.20, 0.005 ≤ f ≤ 0.100, 0.001 ≤ g ≤ 0.050, and 7.00 ≤ x + y ≤ 13.00).

A range of the content of each additive element for optimizing the content balance of each element added to Ni (nickel) as the main component in the ribbon of the present invention will be described below.

First, main effectiveness and hazardousness of other elements (the additive elements) than Ni in the ribbon of the present invention are shown in Table 2. Note that in the present invention, the "ribbon for which the content balance of each additive element is optimized" indicates, for example, a ribbon having a composition being able to obtain "intended function effects, etc." shown in Table 2 as a result of selectively adjusting the content of each additive element for the purpose of obtaining the intended function effects, etc.

**[Table 2]**

| Intended Function Effects | | B | P | Si | Cr | C | N |
|---|---|---|---|---|---|---|---|
| Easiness in Ribbon Manufacturing | (a) Promotion of Amorphization | ⊙ | ⊙ | Δ | Δ | - | - |
| | (b) Reduction in Clogging of Casting Nozzle | ⊙ | ⊙ | ○ | × | - | - |
| | (c) Reduction in Embrittlement | ⊙ | ○ | ○ | × | - | - |
| Easiness in Brazing | (d) Improvement of Coating and Spreading Properties | ⊙ | ○ | ⊙ | - | ○ | - |
| | (e) Reduction in Melting Point | ○ | ⊙ | Δ | × | Δ | - |
| Reliability of Bonded Portion | (f) Improvement of Corrosion Resistance | * | × | - | ⊙ | * | Δ |
| | (g) Improvement of Bonding Strength | ○ | ○ | ○ | - | Δ | - |

### Description of signs

⊙ Excellent (in case where the element is properly contained)
○ Favorable (in case where the element is properly contained)
Δ Acceptable (in case where the element is properly contained)
× Harmful or possibly harmful (in case where the element is properly contained)
* Harmful (in case where the element is properly contained)
- N/A (in case where the element is properly contained)

For example, for enhancing easiness in ribbon manufacturing, each additive element and the content thereof are preferably selectively adjusted from a viewpoint of obtaining the function effects (a) to (c) in Table 2. Considering the point (a), it is extremely effective that B or P is properly contained, and it is slightly effective that Si or Cr is properly contained. Considering the point (b), it is extremely effective that B or P is properly contained, and it is slightly effective that Si is properly contained. Note that inclusion of Cr is harmful or provides a probability of being harmful. Considering the point (c), it is extremely effective that B is properly contained, and it is slightly effective that P and Si are properly contained. Note that inclusion of Cr is harmful or provides a probability of being harmful.

Similarly, for enhancing easiness in brazing, each additive element and the content thereof are preferably selectively adjusted from a viewpoint of obtaining the function effect (d) or (e), for example. Considering the point (d), it is extremely effective that B or Si is properly contained, and it is slightly effective that P or C is properly contained. Considering the point (e), it is extremely effective that P is properly contained, it is effective that B is properly contained, and it is slightly effective that Si and C are properly contained. Note that inclusion of Cr is harmful or provides a probability of being harmful.

Similarly, for enhancing reliability of a braze-bonded portion, each additive element and the content thereof are preferably selectively adjusted from a viewpoint of obtaining the function effect (f) or (g), for example. Considering the point (f), it is extremely effective that Cr is properly contained, and it is slightly effective that N is properly contained. Note that inclusion of B or C is harmful. Moreover, inclusion of P is harmful or provides a probability of being harmful. Considering the point (g), it is effective that B, P, or Si is properly contained, and it is slightly effective that C is properly contained.

In order to determine the composition of the ribbon of the present invention as described above, it is considered that not only the function effects (a) to (c) but also the function effects (d), (e), (f), and (g) as shown in Table 2 need to be obtained, for example. Thus, when the range of the content of each additive element for optimizing the content balance of each element added to Ni as the main component is determined, the effectiveness, the hazardousness, etc. are preferably sufficiently taken into consideration in accordance with the intended function effects, etc. as shown in Table 2, for example. When there are particularly-emphasized function effects, the effectiveness, the hazardousness, etc. need to be sufficiently taken into consideration in accordance with these function effects.

Next, the proper range of the content of each of other elements (the additive elements) than Ni in the ribbon of the present invention and the reasons for such a range will be described.

The elements needing to be particularly properly contained in the ribbon (the Ni-base amorphous alloy ribbon) of the present invention are B and P which are important to enhance the easiness in ribbon manufacturing to obtain a healthy ribbon and which have an amorphous formation ability. Moreover, Si being able to help action of these elements is also an element needing to be particularly properly contained. The element B described herein is a well-known additive element having the amorphous formation ability. It has been reported that in brazing of base materials formed using stainless steel, the base materials are easily corroded due to generation of a Cr boride caused by diffusion of B in the base materials. That is, B is effective in terms of amorphization. However, in terms of brazing, harmful opposite action is provided because corrosion resistance of the base materials is reduced. In view of such opposite action, the inventors of the present invention have found that the content balance with other additive elements is important. Each additive element will be described in detail below.

### Bz: 0 < z ≤ 0.20

Specifically, in the present invention, z representing the content of B (boron) in units of mass% needs to be set within a range of 0 < d ≤ 0.20. When z is 0 (zero), i.e., when B is not contained at all, amorphization is insufficient. For this reason, it is difficult to reduce embrittlement of the ribbon. On the other hand, z exceeding 0.20 is not preferable, the base materials formed using stainless steel tend to be corroded after brazing. Inclusion of B of equal to or less than 0.20 mass% ensures the amorphous formation ability. In addition, the following function effects can be obtained with almost no influence on the corrosion resistance of the base materials after brazing: improvement of mechanical strength of the braze-bonded portion by improvement of wetting and spreading properties of a brazing material; and reduction in clogging of a casting nozzle in ribbon manufacturing. In the present invention, the content of B is more preferably set within a range of z ≥ 0.01, and therefore, the amorphous formation ability is ensured. In addition, the content of B is set within a range of z ≤ 0.15, and therefore, corrosion of the base materials is reduced. With optimization of the content of B as described above, ribbon manufacturing can be facilitated. Depending on the content balance of other elements, a tensile strength of equal to or greater than 400 MPa is obtained, for example. As described above, braze-bonding strength can be more improved.

### Px: 4.00 ≤ x ≤ 8.00

In the present invention, P (phosphorus) is an additive element having the amorphous formation ability as in B described above. A character "x" representing the content of P in units of mass% needs to be set within a range of 4.00 ≤ x ≤ 8.00. Moreover, P can also provide the function effect of reducing the melting point of the ribbon of the present invention. An x value of less than 4.00 is not preferable because the function effect of amorphization is reduced. Moreover, x of less than 4.00 is not preferable because a liquidus-line temperature T_{L} increases. On the other hand, x exceeding 8.00 is not preferable because embrittlement of the ribbon becomes noticeable. Note that when a brazing material having a high liquidus-line temperature T_{L} is used, a brazing temperature needs to be set high. This might lead to a problem that the mechanical strength decreases due to growth of crystal grains of the base materials (stainless steel) in the braze-bonded portion or in the vicinity thereof.

### Siy: 1.00 ≤ y ≤ 7.00

In the present invention, Si (silicon) is an additive element for obtaining the function effect of helping amorphization made by B and P. A character "y" representing the content of Si in units of mass% needs to be set within a range of 1.00 ≤ y ≤ 7.00. Moreover, Si can also provide the function effect of improving the wetting and spreading properties in use of the ribbon of the present invention as the brazing material. A y value of less than 1.00 is not preferable because the function effect of helping amorphization is reduced. Moreover, y of less than 1.00 is not preferable because void is easily caused due to insufficient wetting and spreading properties of the molten brazing material and the bonding strength of the braze-bonded portion decreases due to such void. On the other hand, y exceeding 7.00 is not preferable because embrittlement of the ribbon is easily caused.

### PxSiy: 7.00 ≤ x + y ≤ 13.00

In the present invention, P and Si satisfy, as described above, conditions of Px: 4.00 ≤ x ≤ 8.00 and Siy: 1.00 ≤ y ≤ 7.00, and x + y representing the total content of P and Si in units of mass% needs to be set within a range of 7.00 ≤ x + y ≤ 13.00. An x + y value of less than 7.00 is not preferable because the above-described function effect of amorphization or the above-described function effect of helping amorphization is reduced. On the other hand, x + y exceeding 13.00 is not preferable because it is difficult to reduce embrittlement of the ribbon. The value of x + y is more preferably set within a range of 8.00 ≤ x + y ≤ 10.00.

Next, Cr, C, and N effective for, e.g., improvement of the corrosion resistance of the braze-bonded portion of the base materials formed using stainless steel will be described.

### Crd: 22.00 ≤ d ≤ 29.00

In the present invention, Cr (chromium) is an additive element for obtaining the function effect of improving the corrosion resistance of the braze-bonded portion. A character "d" representing the content of Cr in units of mass% needs to be set within a range of 22.00 ≤ d ≤ 29.00. A d value of less than 22.00 is not preferable because the corrosion resistance is reduced. On the other hand, d exceeding 29.00 is not preferable because embrittlement of the ribbon is easily caused. Moreover, d exceeding 29.00 is not preferable because the casting nozzle is easily clogged.

### Cf: 0.005 ≤ f ≤ 0.100

In the present invention, C (carbon) is an additive element for obtaining the function effect of enhancing the wetting and spreading properties of the molten brazing material in brazing to improve the braze-bonding strength. A character "f" representing the content of C in units of mass% needs to be set within a range of 0.005 ≤ f ≤ 0.100. A value of less than 0.005 is not preferable because the wetting and spreading properties of the brazing material are insufficient, and the function effect of improving the braze-bonded strength is reduced. On the other hand, f exceeding 0.100 is not preferable because there is a probability that C is diffused to the base materials after brazing and the harmful effect of reducing the corrosion resistance due to B is accelerated.

### Ng: 0.001 ≤ g ≤ 0.050

In the present invention, N (nitrogen) is, as in C, an additive element for obtaining the function effect of helping improvement of the corrosion resistance by Cr of the braze-bonded portion. A character "g" representing the content of N in units of mass% needs to be set within a range of 0.001 ≤ g ≤ 0.050. A g value of less than 0.001 is not preferable because the function effect of helping improvement of the corrosion resistance is reduced. On the other hand, g exceeding 0.050 is not preferable because a Cr-deficiency region (a Cr-deficiency layer) expands due to an increase in the amount of generation of Cr nitride and the corrosion resistance of the braze-bonded portion is reduced.

Elements replaceable with part of Ni as the main component in the ribbon of the present invention will be specifically described below.

In the present invention, Mo (molybdenum) is replaceable with part of Ni as long as Mo is equal to or less than 10.00 mass%. In addition to the function effect of improving the amorphous formation ability, Mo is also an element contributing to improvement of oxidation resistance and thermal resistance. A more preferable replacement amount of Mo is equal to or less than 2.00 mass%, and a much more preferable replacement amount of Mo is within a range of 0.50 to 1.50 mass%.

In the present invention, Cu (copper) is replaceable with part of Ni as long as Cu is equal to or less than 5.00 mass%. The element Cu is an element contributing to improvement of the corrosion resistance. A more preferable replacement amount of Cu is equal to or less than 2.00 mass%.

In the present invention, V (vanadium), Nb (niobium), and Ta (tantalum) are replaceable with part of Ni as long as the total amount of these elements is equal to or less than 1.00 mass%. In this case, any one, two, or all of V, Nb, and Ta can be selected and replaced with part of Ni. The elements V, Nb, and Ta contribute to improvement of intergranular corrosion resistance in the vicinity of the braze-bonded portion of the base materials. The elements of V, Nb, and Ta provide the function effect of suppressing B contained in the brazing material from diffusing to the base materials. Thus, it can be expected that V, Nb, and Ta reduce the harmful effect of reducing the corrosion resistance of the base materials due to B or C.

In the present invention, Fe (iron) is replaceable with part of Ni as long as Fe is equal to or less than 25.00 mass%. Replacement of more Fe with part of Ni is preferable because such replacement can reduce a manufacturing cost (a raw material cost) of the ribbon. However, a Fe replacement amount exceeding 25.00 mass% is not preferable because the brazing temperature increases with an increase in the liquidus-line temperature T_{L}. The Fe replacement amount is preferably equal to or less than 10.00 mass%, more preferably equal to or less than 5.00 mass%, and much more preferably equal to or less than 1.00 mass%.

As long as the advantageous effects of the present invention are not undermined, the ribbon of the present invention may contain other elements than above, such as Co (cobalt), Mn (manganese), O (oxygen), S (sulfur), and A1 (aluminum).

The ribbon of the present invention is the Ni-base amorphous alloy ribbon. Note that as long as the form of the ribbon is not disfigured due to embrittlement etc., a crystal phase may be formed as part of the composition.

Next, the method for manufacturing the ribbon of the present invention will be described. Further, the features of the ribbon of the present invention obtained by such a method will be described. The ribbon of the present invention can be manufactured by a typically-known liquid quenching technique such as a single-roll technique. Specifically, molten metal having a composition represented by a composition formula:
Ni_{100-d-x-y-z-f-g}Cr_{d}PₓSi_{y}B_{z}C_{f}N_{g} (in units of mass%, 22.00 ≤ d ≤ 29.00, 4.00 ≤ x ≤ 8.00, 1.00 ≤ y ≤ 7.00, 0 < z ≤ 0.20, 0.005 ≤ f ≤ 0.100, 0.001 ≤ g ≤ 0.050, and 7.00 ≤ x + y ≤ 13.00) is held at a temperature of equal to or higher than 1100°C. The molten metal is sprayed from the casting nozzle onto a surface of a copper alloy roll rotating at high speed. At this point, the molten metal having the above-described composition is sprayed through a slit-shaped opening formed at a tip end portion of the casting nozzle. The sprayed molten metal contacts the roll surface, and is instantaneously quenched. Then, a cast structure is solidified in an amorphized state, and as a result, an elongated amorphous alloy ribbon is formed.

The copper alloy roll is mainly a water-cooling roll having a water path right below the outer periphery thereof. The water-cooling roll is designed so that the range of the surface temperature of the roll can be properly controlled. Moreover, Cu-Be alloy, Cu-Cr alloy, Cu-Zr alloy, Cu-Cr-Zr alloy, or Cu-Ni-Si alloy is mainly used as the material of the roll, for example. Further, the speed of the circumference of the roll is typically set within a range of 15 m/s to 35 m/s. In addition, a gap between the roll surface and the tip end of the casting nozzle is typically set within a range of 50 µm to 250 µm.

When the above-described molten metal is sprayed through the slit-shaped opening of the casting nozzle, the tip end portion of the casting nozzle or the roll surface may be in atmosphere of inert gas such as argon gas or helium gas, atmosphere of carbon dioxide, vacuum, or atmospheric air. For example, the case where at least the periphery of the tip end portion of the casting nozzle is in inert gas atmosphere or vacuum is preferable because of the following reasons. Oxidation of the molten metal which is easily oxidized when sprayed from the casting nozzle is reduced. Thus, clogging of the casting nozzle can be prevented, and the amount of oxygen taken into the ribbon can be reduced. This can contribute to improvement of the bonding strength of the braze-bonded portion. Moreover, in order to reduce clogging of the casting nozzle, the tip end portion of the casting nozzle is preferably heated to a proper temperature to suppress a decrease in the temperature of the tip end portion.

The ribbon of the present invention obtained as described above can have the following dimensions: a thickness of about 15 µm to 60 µm and a width of about 5 mm to 500 mm. The dimensions of the ribbon are changeable due to influence of various conditions such as the temperature and composition of the molten metal, the dimensions of the slit-shaped opening of the casting nozzle, the gap between the tip end of the casting nozzle and the roll surface, the speed of the circumference of the roll, a surface temperature, and a surface roughness. The thickness of the ribbon as the brazing material is preferably within a range of 20 µm to 40 µm. The risk of reducing the bonding strength due to an excessive increase in the volume ratio of the brazing material component of the braze-bonded portion can be avoided.

In order to prevent occurrence of void and air gap in the braze-bonded portion to prevent reduction in the bonding strength, the ribbon of the present invention is preferably formed with proper surface properties of the ribbon. Specifically, the surface roughness of the ribbon of the present invention is preferably equal to or less than 1.0 µm in units of Ra (an arithmetic average roughness), more preferably equal to or less than 0.5µm. In order to obtain the ribbon with such a preferable surface roughness, the roll surface is, for example, preferably polished while the molten metal is being sprayed from the casting nozzle, and in this manner, the surface roughness of the roll is controlled within a proper range. When the surface roughness of the roll is extremely great, adhesion of the molten metal to the roll surface is reduced. For this reason, the molten metal is easily crystalized, leading to easy embrittlement of the ribbon. Thus, the roll surface is preferably polished so that the surface roughness of the roll is maintained within the proper range. As a result, the molten metal adheres to the roll surface, and therefore, is easily amorphized. In the case of polishing the roll surface, powder generated by polishing is preferably sucked. This prevents the powder from adhering to the roll surface, and prevents the powder from mixing with the sprayed molten metal and adhering to the ribbon.

It has been found that the gap between the tip end of the casting nozzle and the roll surface exerts influence on the surface roughness of the ribbon as described above. In order to obtain a ribbon with a small surface roughness, the above-described gap is preferably set within a range of twofold to tenfold of the target thickness of the ribbon, more preferably a range of threefold to eightfold of the target thickness. Moreover, in order to obtain a wide ribbon with a great width dimension, the ribbon is preferably rolled up as a ribbon formed by solidification of the molten metal and peeled from the roll surface. By rolling up, bending and breaking of the ribbon can be prevented.

There is a probability that an excessive change in the thickness of the ribbon (i.e., a thickness change) leads to a non-uniform bonding state in brazing. For this reason, the thickness change of the ribbon is preferably within a range of ±10% of an average thickness for every 200 mm in the longitudinal direction of the ribbon and for the entire width of the ribbon in the width direction thereof, more preferably a range of ±5% of the average thickness. In order to obtain a ribbon with the thickness change being suppressed within the preferable range as described above, it is preferred that the thickness of the ribbon peeled from the roll surface after solidification of the molten metal is continuously measured. Various conditions such as the spraying pressure (the tapping pressure) of the molten metal from the casting nozzle and the speed of the circumference of the roll are preferably controlled corresponding to a thickness value or a thickness change value based on a thickness measurement value, and in this manner, the thickness or the thickness change of the formed ribbon is controlled within a predetermined change range.

Using the above-described ribbon (the brazing Ni-base amorphous alloy ribbon) of the present invention, a stainless steel bonded body formed by braze-bonding can be manufactured. In this case, the ribbon liquidus-line temperature T_{L} within a range of 900°C to 1050°C is preferable because the brazing temperature can be set within a range of about 950°C to 1100°C (T_{L} + about 50°C). Thus, coarsening of the stainless steel grains of the base materials can be reduced in brazing. Moreover, a bonded structure (a coupling structure) with a high mechanical strength can be obtained. Thus, the stainless steel bonded body using the ribbon of the present invention has a high bonding strength and excellent corrosion resistance because of excellent features and advantageous effects of the ribbon of the present invention. As a result, e.g., an EGR cooler and a heat exchanger with a high reliability are available in practical use. The present invention is not limited to the EGR cooler and the heat exchanger, and it is expected that the present invention can be utilized as highly-reliable braze-bonded components, members, equipment, devices, and facilities in various industrial fields such as the airline industry, the space industry, the nuclear industry, the automobile industry, the electronic equipment industry, and various power-generating industries.

The case where two base materials are braze-bonded using the ribbon of the present invention to form a stainless steel bonded body with a three-layer structure will be described as an example of the method for manufacturing the stainless steel bonded body of the present invention.

First, a ribbon (hereinafter referred to as a "ribbon piece") as a brazing material in the present invention and two base materials (hereinafter referred to as a "first base material" and a "second base material") formed using stainless steel such as austenitic or ferritic stainless steel are prepared by processing into required dimensions. Then, the ribbon piece is sandwiched at an expected brazing point between the first and second base materials, and in this manner, a three-layer structure (hereinafter referred to as a "heat treatment target object") of the first base material, the ribbon piece, and the second base material is obtained. Subsequently, the heat treatment target object is placed in a heat treatment furnace.

The inside of the heat treatment furnace is in vacuum, atmosphere of inert gas such as argon gas, or atmosphere of hydrogen gas, for example. A temperature of equal to or higher than the liquidus-line temperature T_{L} of the ribbon piece as the brazing material is held by a temperature increase by heating, and then, is decreased. During a series of heat treatment as described above, the ribbon piece as the brazing material is molten between the first and second base materials. Subsequently, the molten ribbon piece is solidified, and then, a stainless steel bonded body including the braze-bonded first and second base materials can be obtained.

The ribbon piece in the heat treatment furnace is crystallized by heating, and therefore, is no longer in an amorphous state. When the ribbon piece begins melting at a temperature of equal to or higher than a solidus-line temperature Tₛ, braze-bonding begins. A heating technique in brazing may include heating by a carbon heater, high-frequency induction heating, or heat generation by current applied to the base materials. Alternatively, liquid phase diffusion bonding can be performed in the following manner: by selecting various heating technique conditions, B or P contained in the brazing material diffuses to the base materials during heating, and the melting point of the brazing material portion increases by a decrease in B or P; and in this manner, the brazing material portion is solidified.

For the ribbon (the brazing Ni-base amorphous alloy ribbon) of the present invention, cutting processing, punching processing, or curving processing can be performed when necessary in manufacturing of the stainless steel bonded body of the present invention by using the ribbon of the present invention. Moreover, the base materials to be brazed using the ribbon of the present invention are not limited to stainless steel. For example, the ribbon of the present invention can be used for the purpose of brazing of various metal materials such as Ni-base heat-resisting alloy or Fe-base alloy.

The ribbon of the present invention and the stainless steel bonded body formed using such a ribbon will be described in more detail with reference to the following examples. Note that the present invention is not limited to these examples. Examples

### (First Example)

A Ni-base amorphous alloy ribbon as the embodiment of the present invention was produced using a single-roll device. Specifically, a raw material mixed to have a predetermined composition was first subjected to high-frequency melting, and in this manner, master alloy (a master material) was produced. The master alloy was molten in a crucible including a casting nozzle at a lower portion thereof, and in this manner, molten metal was produced. Next, the molten metal was sprayed onto a surface of a water-cooling roll made of Cu-Be-based copper alloy, and was quenched. Then, the resultant was peeled. In this manner, a Ni-base alloy ribbon (hereinafter referred to as a "ribbon A") having a composition shown in Table 3 and having a width of 20 mm and a thickness of 20 µm was produced. Note that a gap between a tip end of the casting nozzle and the roll surface was set at 80 µm.

Next, it was checked whether or not the formative phase of the produced ribbon A is an amorphous phase. A test piece collected from the ribbon A was analyzed using an X-ray diffraction device. Moreover, in order to check toughness of the ribbon A, the test for curving the test piece of the ribbon A to 180° was performed. In this test, curving of the test piece of the ribbon A to 180° without cracking was determined as having favorable toughness. When the test piece of the ribbon A cracked, it was determined that embrittlement of the test piece is caused. In addition, a liquidus-line temperature T_{L} was measured using the test piece of the ribbon A.

These results are shown in Table 3 (Nos. 1 to 15). Moreover, Table 3 additionally shows, as comparative examples and a reference example, results similarly taken for a Ni-base alloy ribbon (Nos. 16 to 19) having a composition outside the range of the present invention and the composition of typical brazing Ni-base alloy powder (No. 20). Note that in Table 3, "AM" indicates that a main phase is an amorphous phase, "CR" indicates that the main phase is a crystal phase, "○" indicates favorable toughness, "×" indicates that embrittlement is caused, and "-" indicates not to be targeted for evaluation.

**[Table 3]**

| Classification | No | Composition (mass%) | Formative Phase | Toughness |
|---|---|---|---|---|
| | 1 | Ni_{bal}.Cr_{25.01}P_{6.01}Si_{3.02}B_{0.02}C_{0.005}N_{0.002} | AM | ○ |
| | 2 | Ni_{bal}.Cr_{26.02}P_{6.03}Si_{4.01}B_{0.05}C_{0.021}N_{0.001} | AM | ○ |
| | 3 | Ni_{bal}.Cr_{22.01}P_{8.00}Si_{1.02}B_{0.15}C_{0.032}N_{0.01} | AM | ○ |
| | 4 | Ni_{bal}.Cr_{22.00}P_{6.50}Si_{4.01}B_{0.15}C_{0.032}N_{0.01} | AM | ○ |
| | 5 | Ni_{bal}.Cr_{24.12}P_{5.94}Si_{1.50}B_{0.18}C_{0.032}N_{0.0254}Mo_{1.42} | AM | ○ |
| | 6 | Ni_{bal}.Cr_{26.12}P_{5.98}Si_{3.01}B_{0.200}C_{0.040}N_{0.002}Mo_{1.01}Cu_{0.51} | AM | ○ |
| Present Invention Examples | 7 | Ni_{bal}.Cr_{24.21}P_{6.84}Si_{1.90}B_{0.17}C_{0.032}N_{0.0286}Mo_{0.14} | AM | ○ |
| | 8 | Ni_{bal}.Cr_{25.01}P_{6.04}Si_{2.61}B_{0.01}C_{0.071}N_{0.002}Mo_{0.50}Nb_{0.99} | AM | ○ |
| | 9 | Ni_{bal}.Cr_{27.03}P_{4.00}Si_{5.52}B_{0.005}C_{0.071}N_{0.002}Mo_{0.49}Cu_{0.98} | AM | ○ |
| | 10 | Ni_{bal}.Cr_{29.00}P_{7.54}Si_{1.00}B_{0.15}C_{0.072}N_{0.050}Mo_{0.51}Ta_{1.00} | AM | ○ |
| | 11 | Ni_{bal}.Cr_{27.31}P_{6.02}Si_{3.23}B_{0.15}C_{0.100}N_{0.050}Mo0_{0.49}Fe_{25.00} | AM | ○ |
| | 12 | Ni_{bal}.Cr_{26.02}P_{6.05}Si_{2.91}B_{0.15}C_{0.070}N_{0.002}Mo_{0.52}Fe_{10.03} | AM | ○ |
| | 13 | Ni_{bal}.Cr_{25.01}P_{6.50}Si_{1.00}B_{0.15}C_{0.050}N_{0.002}Mo_{1.51}Fe_{2.01} | AM | ○ |
| | 14 | Ni_{bal}.Cr_{24.01}P_{6.11}Si_{2.50}B_{0.15}C_{0.071}N_{0.002}Mo_{1.00}Cu_{1.50} | AM | ○ |
| | 15 | Ni_{bal}.Cr_{23.02}P_{6.00}Si_{7.00}B_{0.20}C_{0.072}N_{0.002}Fe_{24.88} | AM | ○ |
| Comparative Examples | 16 | Ni_{bal}.Cr_{29.10}P_{6.05}Si_{6.51}B_{0.02}C_{0.181}N_{0.071} | AM | × |
| | 17 | Ni_{bal}.Cr_{6.72}B_{3.12}Si_{4.51}Fe_{2.92}P_{0.005}Cu_{0.012}N_{0.004} | AM | ○ |
| | 18 | Ni_{bal}.Cr_{18.55}B_{1.37}Si_{7.24}Fe_{0.22}P_{0.003}C_{0.019}N_{0.024} | AM | ○ |
| | 19 | Ni_{bal}.Cr_{25.02}P_{8.02}Si_{6.01}B_{0.42}C_{0.081}N_{0.068} | AM | × |
| Reference Example | 20 | Ni_{bal}.Cr_{29.42}P_{5.10}Si_{4.08}B_{0.020}N_{0.0585} (Powder) | AM | - |

The formative phase of any of the ribbons A (Nos. 1 to 15) of the present invention was the amorphous phase. It has been found that a higher possibility of curving the ribbon A to 180° results in better toughness. On the other hand, the formative phase of any of the ribbons (Nos. 16 to 19) of the comparative examples was the amorphous phase. However, it has been found that a higher impossibility of curving the ribbon to 180°results in embrittlement of the ribbon as in Nos. 16 and 19. Thus, it has been found that the ribbon A of the present invention is less likely to be cracked because no embrittlement is caused and that mechanical processing and handling of the ribbon A of the present invention before braze-bonding are facilitated.

Moreover, it has been found that the liquidus-line temperature T_{L} of any of the ribbons A (Nos. 1 to 15) of the present invention, the ribbons (Nos. 16 to 19) of the comparative examples, and the powder (No. 20) of the reference example falls within a range of 900°C to 1050°C.

### (Second Example)

The thickness of the above-described ribbon A was 20 µm. In a second example, some of the conditions set in the first example were changed. That is, a Ni-base alloy ribbon (hereinafter referred to as a "ribbon B") having the same width (20 mm) as that of the ribbon A and a thickness of 22 µm as shown in Table 4 was, by a single-roll technique, produced using a water-cooling roll made of Cu-Cr-based alloy. A gap between a tip end of a casting nozzle and a roll surface was set at 100 µm.

Next, a test piece was, as in the first example, collected from the produced ribbon B. Analysis of a formative phase by an X-ray diffraction device and the test for curving to 180° were performed. In addition, a solidus-line temperature T_{S} and a liquidus-line temperature T_{L} were measured using the test piece of the ribbon B by differential thermal analysis (hereinafter referred to as "DTA"). DTA measurement was performed for different temperature elevation rates. The liquidus-line temperature T_{L} was obtained by extrapolating, to the temperature elevation rate being zero, temperature at which an endothermic peak caused by melting ends.

These results are shown in Table 4 (Nos. 21 to 24). Moreover, Table 4 additionally shows, as comparative examples and a reference example, results similarly taken for a Ni-base alloy ribbon (Nos. 25 to 29) having a composition outside the range of the present invention and the composition of typical brazing Ni-base alloy powder (No. 30). Note that in Table 4, "AM" and "CR" indicate the same meanings as those of Table 3, "○" indicates favorable toughness, "x" indicates that embrittlement is caused, and "-" indicates not to be targeted for evaluation.

**[Table 4]**

| Classification | No | Composition (mass%) | Formative Phase | Toughness | *T_{S}* (°C) | *T_{L}* (°C) |
|---|---|---|---|---|---|---|
| Present Invention Examples | 21 | Ni_{bal}.Cr_{25.01}P_{6.01}Si_{3.02}B_{0.02}C_{0.005}N_{0.002} | AM | ○ | | |
| | 22 | Ni_{bal}.Cr_{24.12}P_{5.94}Si_{1.50}B_{0.18}C_{0.032}N_{0.0264}Mo_{1.42} | AM | ○ | | |
| | 23 | Ni_{bal}.Cr_{24.21}P_{6.84}Si_{1.90}B_{0.17}C_{0.032}N_{0.0268}Mo_{0.14} | AM | ○ | | |
| | 24 | Ni_{bal}.Cr_{25.21}P_{5.89}Si_{3.12}B_{0.03}C_{0.006}N_{0.004} | AM | ○ | | |
| Comparative Examples | 25 | Ni_{bal}.Cr_{28.91}P_{6.01}Si_{6.50}B_{0.02}C_{0.183}N_{0.070} | AM | × | | |
| | 26 | Ni_{bal}.Cr_{6.82}B_{3.10}Si_{4.48}Fe_{2.93}P_{0.006}Cu_{0.014}N_{0.0005} | AM | ○ | | |
| | 27 | Ni_{bal}.Cr_{18.50}B_{1.33}Si_{7.26}Fe_{0.23}P_{0.004}C_{0.018}N_{0.0022} | AM | ○ | | |
| | 28 | Ni_{bal}.Cr_{25.22}P_{8.12}Si_{5.98}B_{0.43}C_{0.079}N_{0.065} | AM | × | | |
| | 29 | Ni_{bal}.Cr_{20.02}P_{8.10}Si_{6.02}B_{0.02}C_{0.005}N_{0.054} | | | | |
| Reference Example | 30 | Ni_{bal}.Cr_{28.82}P_{6.05}Si_{4.01}B_{0.018}N_{0.0574} (Powder) | AM | - | | |

It has been found that the formative phase of any of the ribbons B (Nos. 21 to 24) of the present invention is anamorphous phase. It has been also found that any of the ribbons B (Nos. 21 to 24) of the present invention has favorable toughness. On the other hand, the ribbon (No. 29) having a crystalized formative phase and the ribbon (No. 28) of which formative phase is the amorphous phase, but embrittlement is caused have been found from the ribbons (Nos. 25 to 29) of the comparative examples. In comparison between No. 21 in which the total (P + Si) of P and Si is 9.03 mass% and No. 29 in which P + Si is 14.12 mass%, it has been found that when (P + Si) is extremely large, the ribbon is easily crystalized and it is difficult to reduce embrittlement. Note that in manufacturing of No. 25 (an extremely-large amount of C), No. 28 (an extremely-large amount of P), and No. 29 (an extremely-large amount of P) of the ribbons of the comparative examples, clogging at part of the casting nozzle has been found to a greater or lesser extent. Thus, it has been found that each ribbon B of the present invention is less likely to be cracked because no embrittlement is caused and that mechanical processing and handling of the ribbon B of the present invention before braze-bonding are facilitated.

The solidus-line temperature T_{S} of any of the ribbons B (Nos. 21 to 24) of the present invention was within a range of 878°C to 959°C. The liquidus-line temperature T_{L} was within a range of 955°C to 988°C. The liquidus-line temperature T_{L} of each the ribbon B of the present invention was within the above-described preferable range (900°C to 1050°C) of the liquidus-line temperature TL. Moreover, the solidus-line temperature T_{S} of each ribbon (Nos. 25 to 29) of the comparative examples was within a range of 960°C to 1040°C. The liquidus-line temperature T_{L} was within a range of 988°C to 1127°C. In the case of each ribbon of the comparative examples, a higher liquidus-line temperature T_{L} than the above-described preferable range of the liquidus-line temperature T_{L} has been found. For this reason, brazing can be performed in the case of some of the compositions of the ribbons of the comparative examples. However, each ribbon B of the present invention with both of T_{S} and T_{L} in a lower range than that of each ribbon of the comparative examples can be brazed within a range of 1000°C to 1040°C with reference to a T_{L} upper limit of about +50°C. Thus, it has been found that each ribbon B of the present invention has a proper temperature range for braze-bonding of base materials formed using stainless steel.

### (Third Example)

Using each of the ribbons (Nos. 1 to 15) produced in the above-described first example, the ribbons (Nos. 16 to 19) for comparison, and the powder (No. 20) for reference, braze-bonding of base materials formed using ferritic stainless steel (SUS430) was, in vacuum, performed at a preset brazing temperature of 1080°C. Next, a stainless steel bonded body (hereinafter referred to as a "bonded body") produced by braze-bonding was mechanically processed to produce a tensile test piece for evaluation of tensile strength. Bonding strength evaluation was performed using such a test piece. The tensile test piece was produced with reference to a 2(B) test piece having a circular braze-bonding surface at the center in the longitudinal direction of the test piece and specified according to JIS-Z3192 (Methods of Tension and Shear Tests for Brazed Joint). Similarly, a corrosion resistance test piece for evaluation of corrosion resistance was produced from the bonded body. A corrosion test was performed using such a test piece. In the corrosion test, the corrosion resistance test piece was, for six hours, dipped in 50% sulfuric acid having a temperature of 60°C. Thereafter, the presence or absence of intergranular corrosion of the base materials in the corrosion resistance test piece was observed.

These results are shown in Table 5. Nos. 1 to 15 indicate bonded bodies formed using the ribbons of the present invention, Nos. 16 to 19 indicate bonded bodies formed using the ribbons of the comparative examples, and No. 20 indicates a bonded body formed using the powder of the reference example. Note that in Table 5, "○" indicates favorable corrosion resistance, "Δ" indicates slightly-low corrosion resistance, and "x" indicates low corrosion resistance.

**[Table 5]**

| Classification | No | Composition (mass%) | Formative Phase | Tensile Strength (MPa) | Corrosion Resistance |
|---|---|---|---|---|---|
| | 1 | Ni_{bal}.Cr_{25.01}P_{6.01}Si_{3.02}B_{0.02}C_{0.005}N_{0.002} | SUS430 | 448 | ○ |
| | 2 | Ni_{bal}.Cr_{26.02}P_{6.03}Si_{4.01}B_{0.05}C_{0.021}N_{0.001} | SUS430 | 339 | ○ |
| | 3 | Ni_{bal}.Cr_{22.01}P_{8.00}Si_{1.02}B_{0.15}C_{0.032}N_{0.01} | SUS430 | 330 | ○ |
| | 4 | Ni_{bal}.Cr_{22.00}P_{6.50}Si_{4.01}B_{0.15}C_{0.032}N_{0.01} | SUS430 | 352 | ○ |
| | 5 | Ni_{bal}.Cr_{24.12}P_{5.94}Si_{1.50}B_{0.18}C_{0.032}N_{0.0254}Mo_{1.42} | SUS430 | 293 | ○ |
| | 6 | N_{bal}.Cr_{26.12}P_{5.98}Si_{3.01}B_{0.200}C_{0.040}N_{0.002}Mo_{1.01}Cu_{0.51} | SUS430 | 387 | ○ |
| Present Invention Examples | 7 | Ni_{bal}.Cr_{24.21}P_{6.84}Si_{1.90}B_{0.17}C_{0.032}N_{0.0286}Mo_{0.14} | SUS430 | 345 | ○ |
| | 8 | Ni_{bal}.Cr_{25.01}P_{6.04}Si_{2.61}B_{0.01}C_{0.071}N_{0.002}Mo_{0.50}Nb_{0.99} | SUS430 | 332 | ○ |
| | 9 | Ni_{bal}.Cr_{27.03}P_{4.00}Si_{5.52}B_{0.005}C_{0.071}N_{0.002}Mo_{0.49}Cu_{0.98} | SUS430 | 342 | ○ |
| | 10 | Ni_{bal}.Cr_{29.00}P_{7.54}Si_{1.00}B_{0.15}C_{0.072}N_{0.050}Mo_{0.51}Ta_{1.00} | SUS430 | 372 | ○ |
| | 11 | Ni_{bal}.Cr_{27.31}P_{6.02}Si_{3.23}B_{0.15}C_{0.100}N_{0.050}Mo0_{0.49}Fe_{25.00} | SUS430 | 366 | ○ |
| | 12 | Ni_{bal}.Cr_{26.02}P_{6.05}Si_{2.91}B_{0.15}C_{0.070}N_{0.002}Mo_{0.52}Fe_{10.03} | SUS430 | 410 | ○ |
| | 13 | Ni_{bal}.Cr_{25.01}P_{6.50}Si_{1.00}B_{0.15}C_{0.050}N_{0.002}Mo_{1.51}Fe_{2.01} | SUS430 | 442 | ○ |
| | 14 | Ni_{bal}.Cr_{24.01}P_{6.11}Si_{2.50}B_{0.15}C_{0.071}N_{0.002}Mo_{1.00}Cu_{1.50} | SUS430 | 432 | ○ |
| | 15 | Ni_{bal}.Cr_{23.02}P_{6.00}Si_{7.00}B_{0.20}C_{0.072}N_{0.002}Fe_{24.88} | SUS430 | 398 | ○ |
| Comparative Examples | 16 | Ni_{bal}.Cr_{29.10}P_{6.05}Si_{6.51}B_{0.02}C_{0.181}N_{0.071} | SUS430 | 264 | ○ |
| | 17 | Ni_{bal}.Cr_{6.72}B_{3.12}Si_{4.51}Fe_{2.92}P_{0.005}Cu_{0.012}N_{0.004} | SUS430 | 411 | × |
| | 18 | Ni_{bal}.Cr_{18.55}B_{1.37}Si_{7.24}Fe_{0.22}P_{0.003}C_{0.019}N_{0.024} | SUS430 | 398 | × |
| | 19 | Ni_{bal}.Cr_{25.02}P_{8.02}Si_{6.01}B_{0.42}C_{0.081}N_{0.068} | SUS430 | 288 | Δ |
| Reference Example | 20 | Ni_{bal}.Cr_{29.42}P_{5.10}Si_{4.08}B_{0.020}N_{0.0585} (Powder) | SUS430 | 245 | ○ |

### (1) Tensile Strength

Each bonded body (Nos. 1 to 15) braze-bonded using the ribbon of the present invention was within a range of 293 MPa (No. 5) to 448 MPa (No. 1). Each bonded body (Nos. 16 to 19) formed using the ribbon for comparison was within a range of 288 MPa (No. 19) to 411 MPa (No. 17). Moreover, the bonded body (No. 20) formed using the powder for reference was 245 MPa. The tensile strength in No. 20 was lower than that of each ribbon of the present invention by about 50 MPa. For this reason, according to the present invention, it has been found that the ribbon of the present invention is applicable by composition selection even for purposes requiring a higher braze-bonding strength than that in the case of using the ribbon for comparison. Moreover, it has been also found that a higher braze-bonding strength than that in the case of using the powder for reference is obtained by use of the ribbon of the present invention.

### (2) Corrosion Resistance

It has been found that any of the bonded bodies (Nos. 1 to 15) braze-bonded using the ribbons of the present invention has favorable corrosion resistance. On the other hand, the bonded body (No. 16) having favorable corrosion resistance has been also found from the bonded bodies (Nos. 16 to 19) braze-bonded using the ribbons for comparison. However, the bonded body (No. 19) exhibiting partial corrosion and having slightly-low corrosion resistance and the bonded bodies (Nos. 17 and 18) having low corrosion resistance due to apparent corrosion have been found. As described above, it has been found that in braze-bonding of the base materials formed using, e.g., ferritic stainless steel, the stainless steel bonded body having favorable braze-bonding strength and corrosion resistance is obtained using the ribbon of the present invention.

## Claims

1. A brazing Ni-base amorphous alloy ribbon having a composition represented by a composition formula: Ni_{100-d-x-y-z-f-g}Cr_{d}PₓSi_{y}B_{z}C_{f}N_{g} where in units of mass%, 22.00 ≤ d ≤ 29.00, 4.00 ≤ x ≤ 8.00, 1.00 ≤ y ≤ 7.00, 0 < z ≤ 0.20, 0.005 ≤ f ≤ 0.100, 0.001 ≤ g ≤ 0.050, and 7.00 ≤ x + y ≤ 13.00.

2. The brazing Ni-base amorphous alloy ribbon according to claim 1, wherein 0.01 ≤ z ≤ 0.15.

3. The brazing Ni-base amorphous alloy ribbon according to claim 1 or 2, wherein 7.00 ≤ x + y ≤ 10.00.

4. The brazing Ni-base amorphous alloy ribbon according to any one of claims 1 to 3, wherein part of Ni is replaced with Mo of equal to or less than 10.00 mass%.

5. The brazing Ni-base amorphous alloy ribbon according to any one of claims 1 to 4, wherein part of Ni is replaced with Cu of equal to or less than 5.00 mass%.

6. The brazing Ni-base amorphous alloy ribbon according to any one of claims 1 to 5, wherein part of Ni is replaced with at least one element type selected from V, Nb, and Ta of equal to or less than 1.00 mass%.

7. The brazing Ni-base amorphous alloy ribbon according to any one of claims 1 to 6, wherein part of Ni is replaced with Fe of equal to or less than 25.00 mass%.

8. The brazing Ni-base amorphous alloy ribbon according to any one of claims 1 to 7, wherein a liquidus-line temperature T_{L} is within a range of 900°C to 1050°C.

9. A stainless steel bonded body formed by braze-bonding using the brazing Ni-base amorphous alloy ribbon according to any one of claims 1 to 8.
